# EUROPEAN PATENT APPLICATION

(11) **EP 4 648 515 A1**
(43) Date of publication of application: **12.11.2025**
(21) Application number: 24784119.0
(22) Date of filing: 26.03.2024
(51) Int. Cl.: H04W 72/0446

(54) **DATA SENDING METHOD, RESOURCE CONFIGURATION METHOD, COMMUNICATION NODE AND STORAGE MEDIUM**

(30) Priority: 06.04.2023 CN 202310376665
(71) Applicant: ZTE Corporation, Shenzhen, Guangdong 518057 (CN)
(72) Inventor: XING, Weimin, Shenzhen, Guangdong 518057 (CN); LU, Youxiong, Shenzhen, Guangdong 518057 (CN); BI, Feng, Shenzhen, Guangdong 518057 (CN)
(74) Representative: Aipex B.V.
(86) International application number: PCT/CN2024/083906
(87) International publication number: WO 2024/208034

(57) **Abstract**

Provided are a data sending method, a resource configuration method, a communication node and a storage medium. The data sending method includes: determining a reference time-domain resource; and in response to a first time-domain resource overlapping the reference time-domain resource and the start moment of the first time-domain resource being later than the start moment of the reference time-domain resource, sending supplementary data on a supplementary time-domain resource, where the first time-domain resource is a resource used by a first communication node to send at least one piece of first data, and the start moment of the supplementary time-domain resource is the same as the start moment of the reference time-domain resource.

## Description

### TECHNICAL FIELD

The present application relates to the field of communications, for example, a data sending method, a resource configuration method, a communication node, and a storage medium.

### BACKGROUND

The current sidelink (SL) communication has not adequately solved the coexistence of multiple subcarrier spacings (SCSs) or various physical channels or reference signals over one or more carriers, particularly the problem of automatic gain control (AGC) under sharing. The AGC problem may be described as follows: When a terminal device receives data in a slot, the terminal device must perform AGC at the start moment of the slot to ensure optimal reception performance. However, if the received power experiences an abrupt surge after the start moment of the slot, the AGC performed at the start moment becomes suboptimal for subsequent transmissions; if such AGC is still applied, other problems may occur, and the data reception performance is even compromised.

### SUMMARY

An embodiment of the present application provides a data sending method. The method is applied to a first communication node and includes the following.

A reference time-domain resource is determined; and in response to a first time-domain resource overlapping the reference time-domain resource and the start moment of the first time-domain resource being later than the start moment of the reference time-domain resource, supplementary data is sent on a supplementary time-domain resource, where the first time-domain resource is a resource used by the first communication node to send at least one piece of first data, and the start moment of the supplementary time-domain resource is the same as the start moment of the reference time-domain resource.

An embodiment of the present application provides a resource configuration method. The method is applied by a second communication node and includes the following.

A reference time-domain resource set is configured, where the reference time-domain resource set includes at least one reference time-domain resource, a reference time-domain resource includes one or more slots configured for SL communication, a supplementary time-domain resource used to send supplementary data is configured on the reference time-domain resource, and the start moment of the supplementary time-domain resource is the same as the start moment of the reference time-domain resource.

An embodiment of the present application provides a first communication node. The first communication node includes a processor configured to perform the data sending method of any preceding embodiment when executing a computer program.

An embodiment of the present application provides a second communication node. The second communication node includes a processor configured to perform the resource configuration method of any preceding embodiment when executing a computer program.

An embodiment of the present application further provides a computer-readable storage medium storing a computer program which, when executed by a processor, causes the processor to perform the method of any preceding embodiment.

### BRIEF DESCRIPTION OF DRAWINGS

FIG. 1 is a schematic diagram of an AGC problem in the related art;
FIG. 2 is a flowchart of a data sending method according to an embodiment;
FIG. 3 is an example of data sending according to an embodiment;
FIG. 4 is a flowchart of a resource configuration method according to an embodiment;
FIG. 5 is a structural diagram of a data sending apparatus according to an embodiment;
FIG. 6 is a structural diagram of a resource configuration apparatus according to an embodiment;
FIG. 7 is a structural diagram of a user equipment (UE) according to an embodiment; and
FIG. 8 is a structural diagram of a higher-layer entity according to an embodiment.

### DETAILED DESCRIPTION

The embodiments described herein are intended to explain the present application. Embodiments of the present application are described hereinafter in conjunction with drawings.

SL communication may also be called direct communication or short-range communication, and all forms of direct communication are collectively referred to as SL communication in the following embodiments of the present application. SL communication includes, but is not limited to, vehicle-to-vehicle (V2V) communication, vehicle-to-everything (V2X) communication, and direct UE-to-UE communication (or called Device-to-Device (D2D) communication). In SL communication, when traffic needs to be transmitted between UEs, the traffic data can be transmitted directly from a data source device to a target device without requiring forwarding through an intermediate network device, that is, direct communication is performed between the devices.

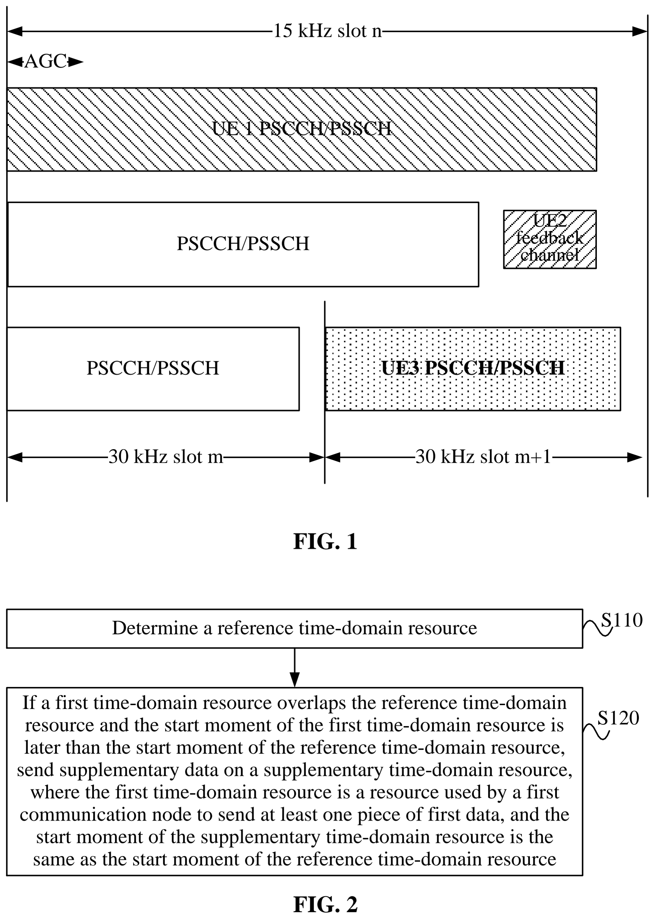

The current SL communication has not adequately solved the coexistence of multiple SCSs or various physical channels or reference signals over one or more carriers, particularly the problem of AGC under a sharing scenario. FIG. 1 is a schematic diagram of an AGC problem in the related art. As shown in FIG. 1, in a scenario of the coexistence of multiple SCSs, the duration of a slot having an SCS of 15 kHz is equal to the combined durations of two slots each having an SCS of 30 kHz, that is, the duration of the slot n is equal to the durations of the slot m and the slot m+1 in FIG. 1. Even if these SCSs are the same, due to variations of durations occupied by different channels/signals, power may abruptly increase when the UE sends another channel/signal after the start moment of one slot, thereby leading to the AGC problem. With reference to FIG. 1, assuming that the UE1 is a long-term evolution (LTE) UE, the UE1 sends a physical sidelink control channel (PSCCH)/physical sidelink sharing channel (PSSCH) in the slot n; the UE2 performs sending using the SCS of 15 kHz but only sends a feedback channel on several middle symbols within the slot n; the UE3 performs sending using the SCS of 30 kHz but only sends a PSCCH/PSSCH in the slot m+1. When the UE4 attempts reception in the slot n, the UE4 performs AGC training at the start moment of the slot n. However, the UE4 only receives the signal from the UE1 at this point and thus adjusts the AGC according to the power of the reception from the UE1, and as the subsequent sending from the UE3 and the UE2 occurs in sequence in the slot n, the power increases in the slot n subsequently, thereby leading to the AGC problem and degrading the reception performance of the UE4 in the slot n.

The data sending method and the resource configuration method provided by the present application may be applied to SL communication systems based on various wireless communication technologies, for example, SL communication systems based on long-term evolution (LTE) technology, 4th-generation (4G) mobile communication technology, 5th-generation (5G) mobile communication technology, hybrid LTE-5G integration technology, 5G New Radio (NR) technology and emerging communication technologies in future such as 6th-generation (6G) mobile communication technology.

The SL communication system supports the following features:
1) More SCSs, also called more time-domain numerologies. One time-domain numerology may be a combination of SCS and cyclic prefix (CP). For example, 5G NR-based SL communication supports SCSs of 15 kHz, 30 kHz, 60 kHz, and the like; LTE-based SL communication supports SCSs of 15 kHz. One time-domain numerology corresponds to one symbol length. For example, the symbol length corresponding to the SCS of 15 kHz is generally twice the symbol length corresponding to the SCS of 30 kHz, the symbol length corresponding to the SCS of 15 kHz is four times the symbol length corresponding to the SCS of 60 kHz, and other SCSs follow the same rule as above.
2) More types of physical channels or reference signals (RSs), which at least include a channel for feedback, a channel for control, and a reference signal for positioning. The occupied durations or the number of occupied symbols may vary across different signals/channels. Taking the physical sidelink feedback channel (PSFCH) used for feedback as an example, the PSFCH differs from the data channel PSSCH, as the PSFCH generally occupies a shorter duration to perform sending.

In the embodiments of the present application, a data sending method, a resource configuration method, a communication node, and a storage medium are provided to solve the coexistence of multiple SCSs or various physical channels or reference signals over one or more carriers, thereby ensuring proper data reception and improving system performance.

In the embodiments of the present application, one slot is composed of one or more symbols, one symbol is determined by an adopted time-frequency parameter, and a single slot may carry one or more types of physical channels or reference signals.

In the embodiments of the present application, "configured" generally refers to the manner in which a base station, an access point, a central node, a higher-layer entity or other network-side entities (hereinafter collectively referred to as "network side") notifies a UE of a configuration signaling; "pre-configured" typically refers to pre-stored configuration information or default configuration information in the UE from factory settings, which may be updated through the network side or in other methods in an embodiment; "pre-defined" refers to configurations or parameters explicitly specified in protocols that cannot be updated. In the following embodiments of the present application, no distinction will be made between "configured", "pre-configured" and "pre-defined" - they will be collectively referred to as "configured". Additionally, the "higher-layer entity" in the following embodiments collectively represents base stations, networks, and other higher-layer entities.

In the embodiments of the present application, "data" may be a channel, a signal, or a message. In the following embodiments of the present application, no distinction will be made between the channel, the signal, and the message - they will be collectively referred to as "data". Further, the serial numbers of slots in the embodiments of the present application may refer to physical slot numbers (generated by sequentially numbering the slots after the slots are sorted in physical time order) or logical numbers (for example, generated by sequentially numbering some selected physical slots after these physical slots form a logical slot set and are sequentially sorted).

A data sending method, a resource configuration method, a communication node and the technical effects thereof will be described below.

FIG. 2 is a flowchart of a data sending method according to an embodiment. As shown in FIG. 2, the method provided in this embodiment is applied to a first communication node. In this embodiment, the first communication node (also called a first communication node device or a first node) may be a source device (for example, a sending UE), and a second communication node (also called a second communication node device or a second node) may be a higher-layer entity. The method includes S110 to S120.

In S110, a reference time-domain resource is determined.

In an embodiment, the reference time-domain resource includes one or more slots configured for SL communication.

The second communication node may configure or pre-define according to protocols a time-domain resource structure, and one or more time-domain base units (for example, slots or symbols) in the time-domain resource structure constitute one reference time-domain resource.

For example, in the LTE technology, 14 or 12 symbols of 15 kHz constitute one subframe, ten subframes constitute one frame, and one reference time-domain resource may be defined as one slot or one subframe at 15 kHz. Alternatively, one reference time-domain resource may be defined as two slots at 30 kHz, and so forth.

In an embodiment, a segment of time-domain length starting from the start moment of the reference time-domain resource may be referred to as a preamble symbol, for example, a segment of time-domain length used for AGC training, and the preamble symbol may include X symbols, where X is a rational number (which may be greater than or equal to one symbol or may be less than one symbol).

In an embodiment, the reference time-domain resource, e.g., a slot, is used for the transmission of at least one SL signal.

In S120, if a first time-domain resource overlaps the reference time-domain resource and the start moment of the first time-domain resource is later than the start moment of the reference time-domain resource, supplementary data is sent on a supplementary time-domain resource, where the first time-domain resource is a resource used by the first communication node to send at least one piece of first data, and the start moment of the supplementary time-domain resource is the same as the start moment of the reference time-domain resource.

For at least one piece of first data that the first communication node needs to send, since the first time-domain resource used to send the at least one piece of first data overlaps the reference time-domain resource and the start moment of the first time-domain resource is later than the start moment of the reference time-domain resource, to solve the AGC problem, supplementary data may be sent on a supplementary time-domain resource in the present application, where the start moment of the supplementary time-domain resource is the same as the start moment of the reference time-domain resource. In this manner, during the AGC training, a target device (for example, a receiving UE) can consistently detect data from all subsequent UEs, thereby enabling proper AGC training.

In the frequency domain, one piece of supplemental data occupies one or more SCSs. For example, the frequency domain may be one or more resource elements (REs), and the bandwidth of one RE is equal to one SCS. Alternatively, the frequency domain may be one or more resource blocks (RBs), and one RB contains several REs. For example, one RB is equal to 12 REs.

On an SL resource pool, in an embodiment, frequency-domain resources configured for the supplementary data in the frequency domain generally do not overlap other channels or signals at the same time. In an embodiment, the supplementary time-domain resource configured on the SL resource pool may be common or shared, that is, different UEs may simultaneously send supplementary data on the configured resource. The supplementary data itself generally does not carry any information and primarily serves to solve the AGC problem. Therefore, having different UEs use the same resource can help reduce resource overhead.

In an embodiment, the power of the supplementary data is greater than or equal to the power of the first data. For example, if the sending UE has no other data to send at the start moment of one reference time-domain resource, that is, the sending UE only sends supplementary data at the start moment of the reference time-domain resource, the power of the supplementary data may be greater than or equal to the power of the first data.

In an embodiment, the end moment of the supplementary time-domain resource is earlier than the start moment of the first time-domain resource.

In an embodiment, the time-domain length of the supplementary time-domain resource is greater than or equal to a preset threshold.

The preset threshold is a configured or pre-defined value. For example, the preset threshold is generally required to be greater than or equal to the duration (for example, one symbol) of the AGC training. Alternatively, the preset threshold is equal to the time-domain length (for example, one or two symbols) of a resource configured to send data of the same type as at least one piece of second data. The at least one piece of second data includes data transmitted through at least one of a PSFCH or a control channel.

In an embodiment, the first communication node meets any one of the following features.

Feature 1: The first communication node does not send any data at the start moment of the reference time-domain resource.

Feature 2: The first communication node sends the at least one piece of second data on a second time-domain resource, where the start moment of the second time-domain resource is the same as the start moment of the reference time-domain resource.

The at least one piece of second data includes data transmitted through at least one of a PSFCH or a control channel.

In the present application, the start location of the second time-domain resource used to send the at least one piece of second data may be configured as the start location of the reference time-domain resource. For example, the start location of a time-domain resource used to send a PSFCH or a control channel may be configured as the start location of the reference time-domain resource. The at least one piece of second data generally occupies a small number of symbols and limited frequency-domain resources. The first communication node sends the at least one piece of second data on the second time-domain resource without causing a serious AGC problem.

The control channel includes a channel for feedback, a channel for control, or a reference signal for positioning or channel measurement.

The power of the at least one piece of second data is less than or equal to the power of the first data. The sum of the power of the at least one piece of second data and the power of the supplementary data is greater than or equal to the power of the first data.

Feature 3: The first communication node needs to receive at least one piece of third data on a third time-domain resource, where the priority of the supplementary data is higher than the highest priority associated with all of the third data, and the start moment of the third time-domain resource is the same as the start moment of the reference time-domain resource.

The first communication node needs to receive at least one piece of third data on a third time-domain resource, and if the priority of the supplementary data is lower than the highest priority associated with all of the third data, the first communication node forgoes sending the supplementary data and forgoes sending the first data (if there is second data, the first communication node also forgoes sending the second data).

In an embodiment, the first communication node generally operates in half-duplex mode, that is, the first communication node can only perform either a sending operation or a reception operation at any given moment and cannot perform both operations simultaneously. As described in the preceding embodiments, if the first communication node needs to send supplementary data, the first communication node should avoid performing any reception operation during the time of sending the supplementary data. For example, to avoid receiving a PSFCH during the abovementioned time, the first communication node needs to reasonably select the time-domain location of a resource for data sending to prevent overlapping between the resource for receiving the PSFCH corresponding to the resource for data sending and the supplementary time-domain resource. Conversely, if the first communication node needs to receive a PSFCH during the abovementioned time, to avoid sending supplementary data, the first communication node needs to reasonably select the time-domain location of the resource for data sending to avoid overlapping between the time required by the resource for data sending to send the supplementary data and the time of receiving the PSFCH.

In an embodiment, the first communication node generally operates in half-duplex mode, that is, the first communication node can only perform either a sending operation or a reception operation at any given moment and cannot perform both operations simultaneously. If the supplementary time-domain resource overlaps the resource used by the first communication node to receive other data, that is, a collision occurs, the first communication node selects an operation with a higher priority according to the priority comparison rule and then performs a sending operation or a reception operation.

For example, the priority of the supplementary data is equal to the highest priority associated with all of the first data or the priority of the supplementary data is equal to the highest priority associated with all of the first data and all of the second data. The second data includes data transmitted through at least one of a PSFCH or a control channel.

The priority generally corresponds to a priority value or a priority sequence number. For example, the larger the priority value or the priority sequence number, the lower the priority; or the larger the priority value or the priority sequence number, the higher the priority.

In an embodiment, the SCS corresponding to one or more slots is less than or equal to the SCS corresponding to data of the same type as the first data, the SCS corresponding to data of the same type as the second data, and the SCS corresponding to data of the same type as the supplementary data.

The SCS corresponding to the data of the same type as first data is equal to the SCS corresponding to the data of the same type as second data, and the SCS corresponding to the data of the same type as first data is equal to the SCS corresponding to the supplementary data.

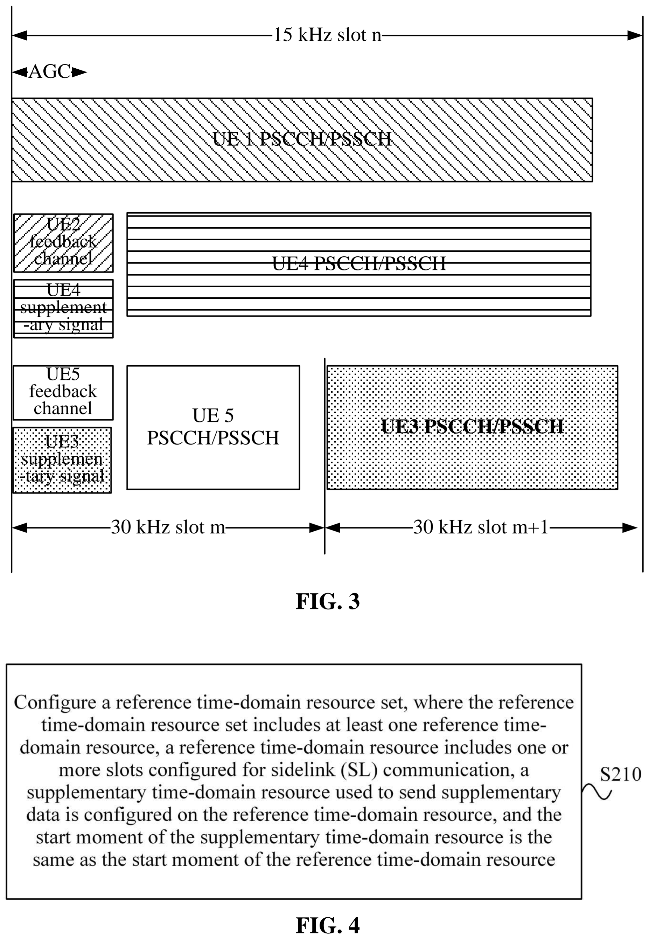

When multiple SCSs coexist in a network and various channels/signals also coexist, a coexistence scenario occurs. FIG. 3 is an example of data sending according to an embodiment. As shown in FIG. 3, a slot of 15 kHz serves as a reference time-domain resource. To solve the AGC problem, for the second data (for example, short signals transmitted through such as a PSFCH or other control channels), the second time-domain resource for sending the second data may be configured at the start moment of the reference slot; for the supplementary data, the supplementary time-domain resource for sending the supplementary data may be aligned with these short signals. Multiple UEs may thus share the supplementary time-domain resource, thereby solving the AGC problem by using fewer resources.

With reference to FIG. 3, for the UE1, the data sent by the UE1 occupies part of the reference time-domain resource, the start moment of the time-domain resource (that is, the first time-domain resource in the preceding embodiments) used by the UE1 to send the data is the same as the start moment of the reference time-domain resource, and at this point, the UE1 may directly send the data without causing a serious AGC problem.

For the UE2, the SCS used for data sending by the UE2 is the same as the SCS of the reference time-domain resource, that is, the SCSs are both 15 kHz. Since the feedback channel is only a short signal (for example, a PSFCH or a control signal) and the start moment of the time-domain resource (that is, the first time-domain resource in the preceding embodiments) used by the UE2 to send the data is the same as the start moment of the reference time-domain resource, the UE2 may directly send the data without causing a serious AGC problem.

For the UE4, the SCS used for data sending by the UE4 is the same as the SCS of the reference time-domain resource, that is, the SCSs are both 15 kHz. Since the start moment of the time-domain resource (that is, the first time-domain resource in the preceding embodiments) used by the UE4 to send the data is later than the start moment of the reference time-domain resource and the UE4 does not have other data to send at the start moment of the reference slot, the UE4 may send the supplementary data on the supplementary time-domain resource, where the start moment of the supplementary time-domain resource is the same as the start moment of the reference time-domain resource. In an instance, the power of the supplementary data is set to be greater than or equal to the power of the first data. For example, the UE4 sets the power of the supplementary data to be the power of the time-domain resource (that is, the first time-domain resource in the preceding embodiments) used by the UE4 to send the data.

For the UE3, the SCS used for data sending by the UE3 is different from the SCS of the reference time-domain resource, that is, the SCSs are 30 kHz and 15 kHz, respectively. Since the start moment of the time-domain resource (that is, the first time-domain resource in the preceding embodiments) used by the UE3 to send the data is later than the start moment of the reference time-domain resource (as shown in FIG. 3, the start moment of the time-domain resource used by the UE3 is located in the second slot of 30 kHz overlapping the reference slot) and the UE3 does not have other data to send at the start moment of the reference slot, the UE3 may send the supplementary data on the supplementary time-domain resource, where the start moment of the supplementary time-domain resource is the same as the start moment of the reference time-domain resource. In an instance, the power of the supplementary data is set to be greater than or equal to the power of the first data. For example, the UE3 sets the power of the supplementary data to be the power of the time-domain resource (that is, the first time-domain resource in the preceding embodiments) used by the UE3 to send the data.

For the UE5, the SCS used for data sending by the UE5 is different from the SCS of the reference time-domain resource, that is, the SCSs are 30 kHz and 15 kHz, respectively. Since the start moment of the time-domain resource (that is, the first time-domain resource in the preceding embodiments) used by the UE5 to send the data is later than the start moment of the reference time-domain resource but the UE5 has other data to send at the start moment of the reference slot (as shown in FIG. 3, the UE5 needs to send a PSFCH), in a possible implementation, the UE5 may normally send the PSFCH and other data and does not send any supplementary data; in another possible implementation, the UE5 may normally send the PSFCH and other data and send the supplementary data on the supplementary time-domain resource, where the start moment of the supplementary time-domain resource is the same as the start moment of the reference time-domain resource. In an instance, the power of the supplementary data is set to be greater than or equal to the power of the first data minus the power of the second data. For example, although the UE5 has the second data to send, the power of the second data is less than the power of the first data, and the power of the supplementary data may be set to be the power of the first time-domain resource used for data sending minus the power corresponding to the second data.

Additionally, at least two of the abovementioned UEs may be considered as a single UE to perform the data sending method provided by the present application. For example, the UE3 and the UE5 may be considered as one UE, for example, a UE6. For the UE6, the SCS used for data sending by the UE6 is different from the SCS of the reference time-domain resource, that is, the SCSs are 30 kHz and 15 kHz, respectively. The UE6 has more than one piece of data to send in the reference slot. For example, the UE6 has one piece of data (similar to the PSCCH/PSSCH sent by the UE5) to send in the slot m and has one piece of data (similar to the PSCCH/PSSCH sent by the UE3) to send in the slot m+1. However, since the start moment of the time-domain resource (that is, the first time-domain resource in the preceding embodiments) used to send these data is later than the start moment of the reference time-domain resource and the UE6 does not have other data to send at the start moment of the reference slot, the UE6 may send the supplementary data on the supplementary time-domain resource, where the start moment of the supplementary time-domain resource is the same as the start moment of the reference time-domain resource. In an instance, the power of the supplementary data is set to be greater than or equal to the highest power among all of the first data. For example, the UE6 sets the power of the supplementary data to be the maximum power among all of the first data to be sent on the first time-domain resource. In an instance, the power of the supplementary data is set to be greater than or equal to the maximum power among all of the first data minus the sum of the power of all of the second data. For example, if the UE6 has both at least one piece of first data and at least one piece of second data to send but the sum of the power of the at least one piece of second data is less than the maximum power among all of the first data, the UE6 may set the power of the supplementary data to be the maximum power among all of the first data minus the sum of the power of all of the second data.

In an embodiment, the priority of the supplementary data of the UE3 and the UE4 depends on the PSCCH/PSSCH subsequently sent by the UE3 and the UE4. If there are multiple pieces of first data, for example, in the case of the UE6, the priority of the supplementary data of the UE6 is equal to the priority of one piece of first data having the highest priority (or the lowest priority) among all of the first data.

In an instance, the power spectral density of the supplemental data is equal to the power spectral density of the second data. For example, the supplemental data and the second data have the same power on one unit bandwidth, where one unit bandwidth may be one RE, one RB, or a certain number of hertz (Hz).

FIG. 4 is a flowchart of a resource configuration method according to an embodiment. As shown in FIG. 4, the method provided in this embodiment is applied to a second communication node. In this embodiment, a first communication node (also called a first communication node device or a first node) may be a source device (for example, a sending UE), and the second communication node (also called a second communication node device or a second node) may be a higher-layer entity. The method includes S210.

In an instance, in addition to solving the AGC problem, the supplementary data may also be used to occupy channel resources. For example, when a first-type device (for example, an NR device) wants to occupy time-frequency resources corresponding to specific reference time-domain resources while preventing other types of devices (for example, an LTE device) from using these time-frequency resources, the first-type device may send supplementary signals on these reference time-domain resources. In this manner, other types of devices detect a high energy level on these reference time-domain resources to make other types of devices deem these reference time-domain resources unavailable, thereby achieving exclusive occupation of the first-type device. The condition for sending the supplementary data at this point may include one of the following cases.

The first-type device has no data to send on a specific reference time-domain resource. In such cases, the UE generally sends supplementary data, and the supplementary data may occupy part or all of the frequency-domain resources on the reference time-domain resource. For example, if the reference time-domain resource contains multiple reference frequency-domain resources (where the bandwidth of one reference frequency-domain resource may be several REs, several RBs, or a certain number of Hz, and one reference frequency-domain resource is called a sub-channel hereafter), the supplementary data may be sent on all or part of the subchannels to occupy resources.

The first-type device has no data to send within a specific bandwidth of a specific reference time-domain resource. In such cases, if the resources originally used by the UE to send data on the reference time-domain resource overlap one or more reference frequency-domain resources, the UE does not need to send any supplementary data on these overlapping reference frequency-domain resources but sends the supplementary data on other non-overlapping reference frequency-domain resources in the reference time-domain resource to occupy resources.

In an instance, if one reference frequency-domain resource needs to be occupied, the supplementary data only needs to be sent on part of the bandwidth of the reference frequency-domain resource to occupy the reference frequency-domain resource. For example, if one subchannel consists of ten RBs, the supplementary data may be sent on just one RB to occupy the subchannel. In an instance, supplementary signals on different reference frequency-domain resources share the same spacing, that is, the supplementary signals are in a comb-shaped pattern. For example, one reference time-domain resource contains ten subchannels, and one subchannel consists of ten RBs, that is, the reference time-domain resource contains a total of 100 RBs. Assuming that these RBs are numbered 0 to 99, respectively, all of the ten subchannels may be occupied by sending the supplementary data on RBs numbered 0, 10, 20, ..., and 90.

In an instance, the supplementary data for occupying channel resources may be sent at any time-domain location within the reference time-domain resource. For example, the supplementary data may be sent at the start moment, the end moment, or an intermediate moment. In an instance, a specific reference time-domain resource to be occupied may be referred to as a specific reference time-domain resource configured with special channel signals, and these channel signals may include feedback channels, control channels, or various reference signals. In an instance, the time-domain location of the supplementary data may overlap the time-domain locations of such special channel signals. For example, if the special channel is a PSFCH, the supplementary data and the PSFCH are at the same time-domain location. If the PSFCH is at the start moment, the supplementary signal is also at the start moment, and if the PSFCH is at the end or middle of the reference time-domain resource, the supplementary signal is also at the corresponding end or middle time-domain location.

In S210, a reference time-domain resource set is configured, where the reference time-domain resource set includes at least one reference time-domain resource, a reference time-domain resource includes one or more slots configured for SL communication, a supplementary time-domain resource used to send supplementary data is configured on the reference time-domain resource, and the start moment of the supplementary time-domain resource is the same as the start moment of the reference time-domain resource.

In an embodiment, the method further includes: configuring at least one of the following parameters:
a first time-domain resource, where the first time-domain resource is a resource used by the first communication node to send at least one piece of first data, and the start moment of the first time-domain resource is later than the start moment of the reference time-domain resource; a second time-domain resource, where the second time-domain resource is a resource used by the first communication node to send at least one piece of second data, and the start moment of the second time-domain resource is the same as the start moment of the reference time-domain resource; a third time-domain resource, where the third time-domain resource is a resource used by the first communication node to receive at least one piece of third data, and the start moment of the third time-domain resource is the same as the start moment of the reference time-domain resource; the SCS corresponding to the data of the same type as the at least one piece of first data; the SCS corresponding to the data of the same type as the at least one piece of second data; or the SCS corresponding to the supplementary data.

In an embodiment, the reference time-domain resource includes one or more slots configured for SL communication.

The second communication node may configure or pre-define according to protocols a time-domain resource structure, and one or more time-domain base units (for example, slots or symbols) in the time-domain resource structure constitute one reference time-domain resource.

For example, in the LTE technology, 14 or 12 symbols of 15 kHz constitute one subframe, ten subframes constitute one frame, and one reference time-domain resource may be defined as one slot or one subframe at 15 kHz. Alternatively, one reference time-domain resource may be defined as two slots at 30 kHz, and so forth.

In an embodiment, a segment of time-domain length starting from the start moment of the reference time-domain resource may be referred to as a preamble symbol, for example, a segment of time-domain length used for AGC training, and the preamble symbol may include X symbols, where X is a rational number (which may be greater than or equal to one symbol or may be less than one symbol).

In an embodiment, the reference time-domain resource, e.g., a slot, is used for the transmission of at least one SL signal.

In an embodiment, the power of the supplementary data is greater than or equal to the power of the first data. For example, if the sending UE has no other data to send at the start moment of one reference time-domain resource, that is, the sending UE only sends supplementary data at the start moment of the reference time-domain resource, the power of the supplementary data may be greater than or equal to the power of the first data.

In an embodiment, the end moment of the supplementary time-domain resource is earlier than the start moment of the first time-domain resource.

In an embodiment, the time-domain length of the supplementary time-domain resource is greater than or equal to a preset threshold.

The preset threshold is a configured or pre-defined value. For example, the preset threshold is generally required to be greater than or equal to the duration (for example, one symbol) of the AGC training. Alternatively, the preset threshold is equal to the time-domain length (for example, one or two symbols) of a resource configured to send data of the same type as the at least one piece of second data. The at least one piece of second data includes data transmitted through at least one of a PSFCH or a control channel.

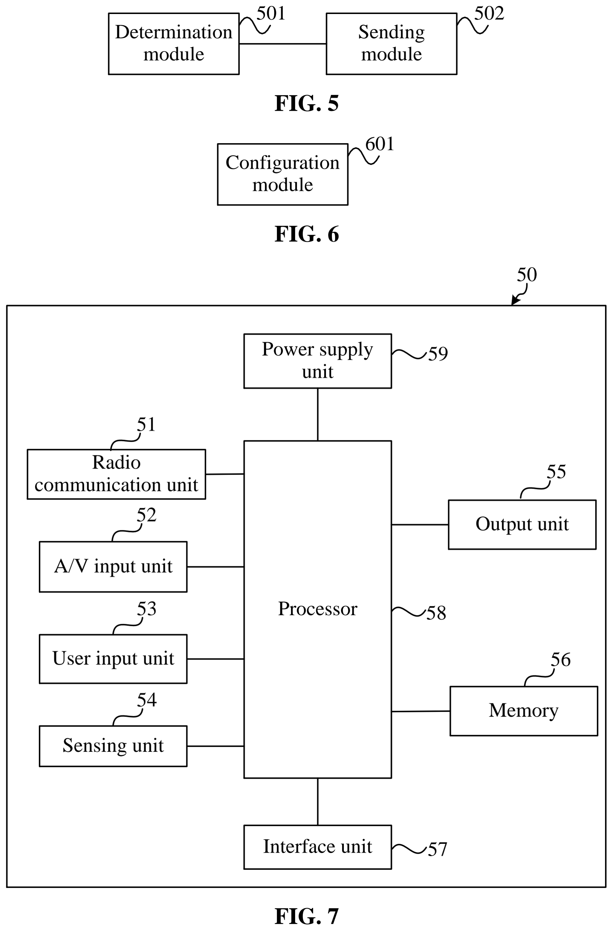

FIG. 5 is a structural diagram of a data sending apparatus according to an embodiment. The apparatus may be configured in a first communication node. As shown in FIG. 5, the apparatus includes a determination module 501 and a sending module 502.

The determination module 501 is configured to determine a reference time-domain resource. The sending module 502 is configured to, if a first time-domain resource overlaps the reference time-domain resource and the start moment of the first time-domain resource is later than the start moment of the reference time-domain resource, send supplementary data on a supplementary time-domain resource, where the first time-domain resource is a resource used by the first communication node to send at least one piece of first data, and the start moment of the supplementary time-domain resource is the same as the start moment of the reference time-domain resource.

The data sending apparatus provided in this embodiment is configured to perform the data sending method provided in the preceding embodiments. The implementation principles and technical effects of the data sending apparatus provided in this embodiment are similar to those of the preceding embodiments and thus are not described here again.

In an embodiment, the end moment of the supplementary time-domain resource is earlier than the start moment of the first time-domain resource.

In an embodiment, the time-domain length of the supplementary time-domain resource is greater than or equal to a preset threshold; the preset threshold is a configured or pre-defined value or the preset threshold is equal to the time-domain length of a resource configured to send data of the same type as the at least one piece of second data.

In an embodiment, the first communication node meets any one of the following features.

The first communication node does not send any data at the start moment of the reference time-domain resource. The first communication node sends at least one piece of second data on a second time-domain resource, where the start moment of the second time-domain resource is the same as the start moment of the reference time-domain resource.

In an embodiment, the first communication node meets the following feature.

The first communication node needs to receive at least one piece of third data on a third time-domain resource, where the priority of the supplementary data is higher than the highest priority associated with all of the third data, and the start moment of the third time-domain resource is the same as the start moment of the reference time-domain resource.

In an embodiment, the priority of the supplementary data is equal to the highest priority associated with all of the first data or the priority of the supplementary data is equal to the highest priority associated with all of the first data and all of the second data.

In an embodiment, the power of the second data is less than or equal to the power of the first data.

In an embodiment, the sum of the power of the second data and the power of the supplementary data is greater than or equal to the power of the first data.

In an embodiment, the power of the supplementary data is greater than or equal to the power of the first data.

In an embodiment, the second data includes data transmitted through at least one of a PSFCH or a control channel.

In an embodiment, the reference time-domain resource includes one or more slots configured for SL communication.

In an embodiment, the SCS corresponding to one or more slots is less than or equal to the SCS corresponding to the first data, the SCS corresponding to the second data, and the SCS corresponding to the supplementary data.

In an embodiment, the SCS corresponding to the first data is equal to the SCS corresponding to the second data, and the SCS corresponding to the first data is equal to the SCS corresponding to the supplementary data.

FIG. 6 is a structural diagram of a resource configuration apparatus according to an embodiment. The apparatus may be configured in a second communication node. As shown in FIG. 6, the apparatus includes a configuration module 601.

The configuration module 601 is configured to configure a reference time-domain resource set, where the reference time-domain resource set includes at least one reference time-domain resource, one reference time-domain resource includes one or more slots configured for SL communication, a supplementary time-domain resource used to send supplementary data is configured on the at least one reference time-domain resource of the reference time-domain resource set, and the start moment of the supplementary time-domain resource is the same as the start moment of the reference time-domain resource.

The data sending apparatus provided in this embodiment is configured to perform the data sending method provided in the preceding embodiments. The implementation principles and technical effects of the data sending apparatus provided in this embodiment are similar to those of the preceding embodiments and thus are not described here again.

In an embodiment, the configuration module 601 is further configured to configure at least one of the following parameters:
a first time-domain resource, where the first time-domain resource is a resource used by the first communication node to send at least one piece of first data, and the start moment of the first time-domain resource is later than the start moment of the reference time-domain resource; a second time-domain resource, where the second time-domain resource is a resource used by the first communication node to send at least one piece of second data, and the start moment of the second time-domain resource is the same as the start moment of the reference time-domain resource; a third time-domain resource, where the third time-domain resource is a resource used by the first communication node to receive at least one piece of third data, and the start moment of the third time-domain resource is the same as the start moment of the reference time-domain resource; the SCS corresponding to the first data; the SCS corresponding to the second data; or the SCS corresponding to the supplementary data.

An embodiment of the present application further provides a communication node. The communication node includes a processor configured to perform the method provided in any embodiment of the present application when executing a computer program. The communication node may be a UE provided in any embodiment of the present application or may be a higher-layer entity provided in any embodiment of the present application, which is not limited in the present application.

For example, the following embodiments provide structural diagrams in which the communication node is a UE and a higher-layer entity, respectively.

FIG. 7 is a structural diagram of a UE according to an embodiment. The UE may be implemented in various forms. The UE in the present application may include a mobile terminal device such as a mobile phone, a smartphone, a notebook computer, a digital broadcast receiver, a personal digital assistant (PDA), a portable device (PAD), a portable media player (PMP), a navigation apparatus, a vehicle-mounted terminal device, a vehicle-mounted display terminal or a vehicle-mounted electronic rearview mirror or a fixed terminal device such as a digital television (TV) or a desktop computer.

As shown in FIG. 7, the UE 50 may include a radio communication unit 51, an audio/video (A/V) input unit 52, a user input unit 53, a sensing unit 54, an output unit 55, a memory 56, an interface unit 57, a processor 58 and a power supply unit 59. FIG. 7 illustrates the UE including various components, and not all of the illustrated components are required to be implemented. More or fewer components may be implemented instead.

In this embodiment, the radio communication unit 51 allows radio communication between the UE 50 and another UE, a base station, or a network. The A/V input unit 52 is configured to receive audio or video signals. The user input unit 53 may generate key input data according to commands input by a user to control various operations of the UE 50. The sensing unit 54 is configured to detect the current state of the UE 50, the location of the UE 50, the presence or absence of the user's touch input into the UE 50, the orientation of the UE 50, the acceleration or deceleration of the UE 50, the direction of the acceleration or deceleration and the like and generate commands or signals for controlling the operations of the UE 50. The interface unit 57 serves as an interface through which at least one external apparatus can be connected to the UE 50. The output unit 55 is configured to provide output signals in a visual, audio and/or tactile manner. The memory 56 may store software programs of processing and control operations executed by the processor 58 or may temporarily store data that has been output or is to be output. The memory 56 may include at least one type of storage medium. Moreover, the UE 50 may cooperate with a network storage apparatus that performs the storage function of the memory 56 through a network connection. The processor 58 is generally configured to control the overall operation of the UE 50. The power supply unit 59 is configured to, under the control of the processor 58, receive external power or internal power and provide appropriate power required for operating various elements and components.

The processor 58 executes programs stored in the memory 56 to perform at least one function application and data processing, for example, to perform the method provided by the embodiments of the present application.

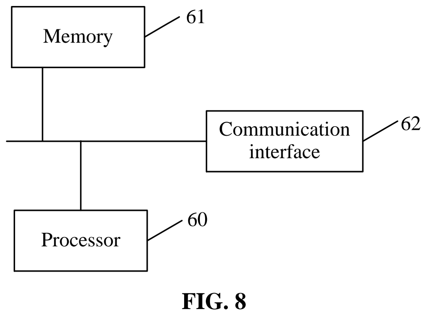

FIG. 8 is a structural diagram of a higher-layer entity according to an embodiment. As shown in FIG. 8, the higher-layer entity includes a processor 60, a memory 61, and a communication interface 62. One or more processors 60 may be provided in the higher-layer entity, and one processor 60 is shown as an example in FIG. 8. The processor 60, the memory 61, and the communication interface 62 in the higher-layer entity may be connected via a bus or in other manners, and the connection via a bus is shown as an example in FIG. 8. The bus represents one or more of several types of bus structures, including a memory bus or a memory controller, a peripheral bus, an accelerated graphics port (AGP), a processor, and a local bus using any of a variety of bus structures.

As a computer-readable storage medium, the memory 61 may be configured to store software programs, computer-executable programs, and modules, such as program instructions/modules corresponding to the method in the embodiments of the present application. The processor 60 runs the software programs, instructions, and modules stored in the memory 61 to execute at least one function application and data processing of the higher-layer entity, that is, to perform the preceding method.

The memory 61 may include a program storage region and a data storage region. The program storage region may store an operating system and an application program required by at least one function. The data storage region may store data created according to the use of the higher-layer entity. Additionally, the memory 61 may include a high-speed random-access memory and may also include a nonvolatile memory such as at least one magnetic disk memory, a flash memory, or another nonvolatile solid-state memory. In some instances, the memory 61 may further include memories remotely disposed relative to the processor 60. These remote memories may be connected to the higher-layer entity via a network. Examples of the network include the Internet, an intranet, a network, a mobile communication network, and a combination thereof.

The communication interface 62 may be configured to receive and send data.

The embodiments of the present application further provide a computer-readable storage medium. The computer-readable storage medium stores a computer program which, when executed by a processor, causes the processor to perform the method provided in any embodiment of the present application.

A computer storage medium in an embodiment of the present application may be one computer-readable medium or any combination of multiple computer-readable media. The computer-readable medium may be a computer-readable signal medium or a computer-readable storage medium. For example, the computer-readable storage medium may be an electrical, magnetic, optical, electromagnetic, infrared or semiconductor system, apparatus or device or any combination thereof. The computer-readable storage medium includes (a non-exhaustive list) an electrical connection having one or more wires, a portable computer disk, a hard disk, a random-access memory (RAM), a read-only memory (ROM), an electrically erasable programmable read-only memory (EPROM), a flash memory, an optical fiber, a portable compact disc read-only memory (CD-ROM), an optical memory, a magnetic memory or any appropriate combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any appropriate combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted by using any appropriate medium including a wireless medium, a wire, an optical cable, a radio frequency (RF), or any appropriate combination thereof.

Computer program codes for executing the operations of the present disclosure may be written in one or more programming languages or a combination of multiple programming languages. The programming languages include object-oriented programming languages (such as Java, Smalltalk, C++, Ruby, and Go) and conventional procedural programming languages (such as "C" or similar programming languages). The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer via any type of network (including a local area network (LAN) or a wide area network (WAN)) or may be connected to an external computer (for example, via the Internet provided by an Internet service provider).

It is to be understood by those skilled in the art that the term "user equipment" encompasses any appropriate type of wireless user device, such as a mobile phone, a portable data processing apparatus, a portable web browser, or an in-vehicle mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented by using any appropriate data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on multi-core processor architecture.

## Claims

1. A data sending method, applied to a first communication node and comprising:
determining a reference time-domain resource; and
in response to a first time-domain resource overlapping the reference time-domain resource and a start moment of the first time-domain resource being later than a start moment of the reference time-domain resource, sending supplementary data on a supplementary time-domain resource, wherein the first time-domain resource is a resource used by the first communication node to send at least one piece of first data, and a start moment of the supplementary time-domain resource is the same as the start moment of the reference time-domain resource.

2. The method of claim 1, wherein an end moment of the supplementary time-domain resource is earlier than the start moment of the first time-domain resource.

3. The method of claim 1, wherein a time-domain length of the supplementary time-domain resource is greater than or equal to a preset threshold;
wherein the preset threshold is a configured or pre-defined value or the preset threshold is equal to a time-domain length of a resource configured to send data of the same type as at least one piece of second data.

4. The method of claim 1, wherein the first communication node meets one of the following:
the first communication node sends no data at the start moment of the reference time-domain resource; or
the first communication node sends at least one piece of second data on a second time-domain resource, wherein a start moment of the second time-domain resource is the same as the start moment of the reference time-domain resource.

5. The method of claim 1, wherein the first communication node meets the following:
the first communication node needs to receive at least one piece of third data on a third time-domain resource, wherein a priority of the supplementary data is higher than a highest priority associated with all of the at least one piece of the third data, and a start moment of the third time-domain resource is the same as the start moment of the reference time-domain resource.

6. The method of claim 5, wherein
the priority of the supplementary data is equal to a highest priority associated with all of the at least one piece of first data; or
the priority of the supplementary data is equal to a highest priority associated with all of the at least one piece of first data and all of at least one piece of second data.

7. The method of claim 4, wherein a power of the at least one piece of second data is less than or equal to a power of the at least one piece of first data.

8. The method of claim 7, wherein a sum of the power of the at least one piece of second data and a power of the supplementary data is greater than or equal to the power of the at least one piece of first data.

9. The method of claim 1, wherein the power of the supplementary data is greater than or equal to the power of the at least one piece of first data.

10. The method of any one of claims 3 to 4 and 6 to 8, wherein the at least one second data comprises data transmitted through at least one of a physical sidelink feedback channel, PSFCH, or a control channel.

11. The method of claim 4, wherein the reference time-domain resource comprises at least one slot configured for sidelink, SL, communication.

12. The method of claim 11, wherein a subcarrier spacing, SCS, corresponding to the at least one slot is less than or equal to an SCS corresponding to data of the same type as the at least one piece of first data, an SCS corresponding to data of the same type as the at least one piece of second data and an SCS corresponding to the supplementary data.

13. The method of claim 12, wherein the SCS corresponding to the data of the same type as the at least one piece of first data is equal to the SCS corresponding to the data of the same type as the at least one piece of second data, and the SCS corresponding to the data of the same type as the at least one piece of first data is equal to the SCS corresponding to the supplementary data.

14. A resource configuration method, applied to a second communication node and comprising:
configuring a reference time-domain resource set, wherein the reference time-domain resource set comprises at least one reference time-domain resource, a reference time-domain resource of the at least one reference time-domain resource comprises at least one slot configured for sidelink, SL, communication, a supplementary time-domain resource used to send supplementary data is configured in the reference time-domain resource, and a start moment of the supplementary time-domain resource is the same as a start moment of the reference time-domain resource.

15. The method of claim 14, further comprising: configuring at least one of the following parameters:
a first time-domain resource, wherein the first time-domain resource is a resource used by a first communication node to send at least one piece of first data, and a start moment of the first time-domain resource is later than the start moment of the reference time-domain resource;
a second time-domain resource, wherein the second time-domain resource is a resource used by a first communication node to send at least one piece of second data, and a start moment of the second time-domain resource is the same as the start moment of the reference time-domain resource;
a third time-domain resource, wherein the third time-domain resource is a resource used by a first communication node to receive at least one piece of third data, and a start moment of the third time-domain resource is the same as the start moment of the reference time-domain resource;
a subcarrier spacing, SCS, corresponding to data of the same type as the at least one piece of first data;
an SCS corresponding to data of the same type as the at least one piece of second data; or
an SCS corresponding to the supplementary data.

16. A first communication node, comprising a processor configured to, when executing a computer program, perform the data sending method of any one of claims 1 to 13.

17. A second communication node, comprising a processor configured to, when executing a computer program, perform the resource configuration method of claim 14 or 15.

18. A computer-readable storage medium storing a computer program which, when executed by a processor, causes the processor to perform the data sending method of any one of claims 1 to 13 or the resource configuration method of claim 14 or 15.
